# EUROPEAN PATENT APPLICATION

(11) **EP 4 183 475 A2**
(43) Date of publication of application: **24.05.2023**
(21) Application number: 22204474.5
(22) Date of filing: 28.10.2022
(51) Int. Cl.: B01D 63/02, B01D 65/00

(54) **MEMBRANE HUMIDIFIER FOR FUEL CELLS**

(30) Priority: 19.11.2021 KR 20210160278; 19.11.2021 KR 20210160325; 19.11.2021 KR 20210160335
(71) Applicant: K-fuelcell, Inc., Gyeonggi-do 16976 (KR)
(72) Inventor: NOH, Han Jin, 16817 Gyeonggi-do (KR); LEE, Jae Min, 12183 Gyeonggi-do (KR); JEON, Chea Yeong, 16350 Gyeonggi-do (KR)
(74) Representative: AWA Sweden AB

(57) **Abstract**

A membrane humidifier for a fuel cell includes a hollow fiber membrane cartridge including a cartridge housing which is formed as a hollow having openings facing opposite sides of the cartridge housing in the longitudinal direction thereof and which has a side wall having a plurality of vent holes, a hollow fiber membrane inserted into an interior of the cartridge housing, and a resin layer filling an inner space of opposite sides of the cartridge housing in the longitudinal direction thereof, a membrane humidifier housing in which the hollow fiber membrane cartridge is formed, and a bulkhead formed in an interior of the membrane humidifier housing, wherein the bulkhead has mounting holes into which ends of the cartridge housing in the longitudinal direction thereof are inserted.

## Description

### BACKGROUND

### 1. Field

The present disclosure relates to a membrane humidifier for a fuel cell having a built-in hollow fiber membrane cartridge, and more particularly, to a membrane humidifier for a fuel cell, in which a bulkhead is provided to make a hollow fiber membrane cartridge to be easily assembled and dismounted and to increase airtightness of each flow path, and a plurality of hollow fiber membrane cartridges are detachably mounted in a single hollow fiber housing.

### 2. Description of the Related Art

Fuel cells are a power generation type cell that produces electricity by combining hydrogen and oxygen. Unlike general chemical cells such as dry cells and storage batteries, fuel cells can produce electricity continuously as long as hydrogen and oxygen are supplied, and the efficiency thereof is about twice that of an internal combustion engine due to no heat loss. In addition, since the chemical energy generated by the combination of hydrogen and oxygen is directly converted into electrical energy, the emission of pollutants is low. Accordingly, fuel cells are environmentally friendly and reduce concerns about resource depletion due to increased energy consumption. According to the type of electrolyte used, fuel cells can be largely classified as polymer electrolyte membrane fuel cells (PEMFC), phosphoric acid fuel cells (PAFC), molten carbonate fuel cells (MCFC), solid oxide fuel cells (SOFC), and alkaline fuel cell (AFC).

Each of these fuel cells operates on the same principle, but they differ from each other in terms of the type of fuel used, operating temperature, catalyst, electrolyte, etc. From among these fuel cells, polymer electrolyte fuel cells are known to be the most promising not only for small-scale stationary power generation equipment but also for transportation systems because they operate at a lower temperature than other fuel cells and can be manufactured in small sizes due to high power density.

One of the most important factors in improving the performance of polymer electrolyte fuel cells is maintaining of water retention ratio by supplying a certain amount of moisture to a polymer electrolyte membrane or a proton exchange membrane (PEM) of a membrane-electrode assembly (MEA). This is because when the polymer electrolyte membrane dries, the power generation efficiency rapidly decreases. Polymer electrolyte membranes can be humidified by using the following methods: 1) a bubbler humidification method in which water is supplied by allowing a target gas to pass through a diffuser after filling the pressure-resistant container with water; 2) a direct injection method in which the amount of supplied moisture required for fuel cell reaction is calculated and water is supplied directly to a gas flow pipe through a solenoid valve; and 3) a humidification membrane method in which water is supplied to a gas fluidized bed using a polymer separation membrane.

Among them, a humidification membrane method that humidifies a polymer electrolyte membrane by providing water vapor to the gas supplied to the polymer electrolyte membrane using a membrane that selectively transmits only the water vapor contained in the exhaust gas, is advantageous in that the humidifier can be reduced in weight and size. As the selective permeable membrane used in the humidification membrane method, it is preferable to use a hollow fiber membrane having a large permeation area per volume when forming a module. That is, when a humidifier is manufactured using a hollow fiber membrane, the hollow fiber membrane with a large contact surface area can be highly integrated so that a fuel cell can be sufficiently humidified even with a small amount, low-cost materials can be used, and moisture and heat contained in the unreacted gas discharged at high temperature from the fuel cell can be recovered and reused through a humidifier.

As described above, membrane humidifiers for fuel cells configured to perform humidification using hollow fiber membranes have been proposed in various shapes and structures. However, in the case of membrane humidifiers for fuel cells of the related art, many hollow fiber membranes and a housing of a membrane humidifier are integrally coupled to each other by a resin layer. Accordingly, due to the difficulty in assembling the membrane humidifier, productivity is lowered, and when the hollow fiber membrane deteriorates due to a long service period, the hollow fiber membrane alone cannot be replaced. Therefore, the entire membrane humidifier must be discarded. In addition, in membrane humidifiers for fuel cells of the related art, one hollow fiber membrane bundle is placed in one membrane humidifier housing. Accordingly, even when a defect occurs in only some of the hollow fiber membrane bundle, only defected hollow fiber membranes of the bundle cannot be replaced. Therefore, the entire membrane humidifier must be discarded.

A resin layer is made of an expensive material, and when the entire opposite ends of the membrane humidifier housing are filled with the resin layer as in the prior art, the manufacturing costs are very high. The resin layer bonding the hollow fiber membrane to the membrane humidifier housing has a coefficient of thermal expansion that is different from that of the membrane humidifier housing. Accordingly, when the resin layer and the membrane humidifier housing are heated and cooled several times, the resin layer and the membrane humidifier housing may be finely spaced apart from each other. As such, when the resin layer and the membrane humidifier housing are spaced apart from each other, the wet air and the dry air can meet directly so that normal membrane humidification cannot be performed.

### SUMMARY

Provided is a membrane humidifier for a fuel cell, having enhanced airtightness, in which a resin layer is configured to fill only opposite sides of a hollow fiber membrane cartridge, thereby reducing the amount of resin layer used, and a plurality of hollow fiber membrane cartridges are detachably mounted in one membrane humidifier housing, thereby facilitating the assembly and replacing of components, and a bulkhead is provided to increase the airtightness of a wet air flow path and a dry air flow path.

Additional aspects will be set forth in part in the description which follows and, in part, will be apparent from the description, or may be learned by practice of the presented embodiments of the disclosure.

According to an aspect of an embodiment, a membrane humidifier for a fuel cell, includes a hollow fiber membrane cartridge including a cartridge housing which is formed as a hollow having openings facing opposite sides of the cartridge housing in the longitudinal direction thereof and which has a side wall having a plurality of vent holes, a hollow fiber membrane inserted into an interior of the cartridge housing, and a resin layer filling an inner space of opposite sides of the cartridge housing in the longitudinal direction thereof, a membrane humidifier housing in which the hollow fiber membrane cartridge is formed, and a bulkhead formed in an interior of the membrane humidifier housing, wherein the bulkhead has mounting holes into which ends of the cartridge housing in the longitudinal direction thereof are inserted.

In an embodiment, the resin layer may be provided to cover opposite ends of the cartridge housing in the longitudinal direction thereof and the outer surface of opposite sides of the cartridge housing in the longitudinal direction.

In an embodiment, the cartridge housing further includes a protruding rib surrounding a middle portion of the cartridge housing in the longitudinal direction thereof, and the vent holes are formed in a side wall of the cartridge housing in the longitudinal direction thereof and in another side thereof opposite to the side wall with respect to the protruding rib.

In an embodiment, the membrane humidifier housing may include a partition wall having an insertion hole into which the cartridge housing is inserted.

In an embodiment, the bulkhead has a protrusion protruding on an outer end of the mounting hole, and the resin layer is in contact with the protrusion.

In an embodiment, an O-ring sealing a gap between the protrusion and the resin layer, may be further included.

According to an aspect of another embodiment, a membrane humidifier for a fuel cell, includes a hollow fiber membrane cartridge comprising a cartridge housing which is formed as a hollow having openings facing opposite sides of the cartridge housing in the longitudinal direction thereof and which has a side wall having a plurality of vent holes, a locking protrusion protruding opposite sides thereof in the longitudinal direction thereof, and a flange spaced from the locking protrusion, a hollow fiber membrane which is inserted into an interior of the cartridge housing, and a resin layer which fills inner spaces of opposite sides of the cartridge housing in the longitudinal direction thereof, and a membrane humidifier housing in which the hollow fiber membrane cartridge is formed, and a plurality of through-holes filled with the resin layer are formed between a protrusion and the flange.

In an embodiment, the resin layer may be provided to cover opposite ends of the cartridge housing in the longitudinal direction thereof and the outer surface of opposite sides of the cartridge housing in the longitudinal direction.

In an embodiment, the cartridge housing further includes a protruding rib surrounding a middle portion of the cartridge housing in the longitudinal direction thereof, and the vent holes are formed in a side wall of the cartridge housing in the longitudinal direction thereof and in another side thereof opposite to the side wall with respect to the protruding rib.

In an embodiment, the membrane humidifier housing may include a partition wall having an insertion hole into which the cartridge housing is inserted.

In an embodiment, the resin layer has an outer edge that is bent to be in the shape of steps, and the locking protrusion is in contact with a bent portion of the resin layer.

In an embodiment, a protrusion height of the flange may be greater than a protrusion height of the locking protrusion, and the resin layer covers up to a point where the flange is formed, and is stacked up to the protrusion height of the flange.

According to an aspect of an embodiment, a membrane humidifier for a fuel cell, includes a hollow fiber membrane cartridge including a cartridge housing which is formed as a hollow having openings facing opposite sides of the cartridge housing in the longitudinal direction thereof and which has a side wall having a plurality of vent holes, a hollow fiber membrane inserted into an interior of the cartridge housing, and a resin layer filling an inner space of opposite sides of the cartridge housing in the longitudinal direction thereof, a membrane humidifier housing in which the hollow fiber membrane cartridge is formed, and a bulkhead formed in an interior of the membrane humidifier housing, wherein the bulkhead is spaced apart from the cartridge housing.

In an embodiment, the cartridge housing may be connected to the bulkhead through the resin layer.

In an embodiment, an O-ring may be further included between the protrusion and the resin layer.

In an embodiment, the cartridge housing has a locking protrusion protruding on opposite sides thereof in the longitudinal direction thereof and a flange spaced apart from the locking protrusion.

In an embodiment, the resin layer may be formed up to a height at which the flange is formed.

### BRIEF DESCRIPTION OF THE DRAWINGS

The above and other aspects, features, and advantages of certain embodiments of the disclosure will be more apparent from the following description taken in conjunction with the accompanying drawings, in which:
FIGS. 1 and 2 are a perspective view and a cross-sectional perspective view of a membrane humidifier for a fuel cell according to an embodiment of the present disclosure;
FIG. 3 is a perspective view of a hollow fiber membrane cartridge included in the present disclosure;
FIG. 4 is a side view of a cartridge housing;
FIG. 5 is a cross-sectional view of a hollow fiber membrane cartridge included in the present disclosure;
FIG. 6 is an exploded perspective view showing the coupling structure of a bulkhead and a first housing;
FIG. 7 is an exploded perspective view showing the coupling structure of the first housing and a third housing;
FIG. 8 is a cross-sectional view of a membrane humidifier for a fuel cell according to the present disclosure;
FIGS. 9 and 10 are cross-sectional views showing the sealing structure of a membrane humidifier housing;
FIGS. 11 and 12 are a perspective view and a cross-sectional perspective view of a membrane humidifier for a fuel cell according to another embodiment of the present disclosure;
FIGS. 13 and 14 are a perspective view and an exploded perspective view showing a structure in which the bulkhead is coupled to opposite ends of a hollow fiber membrane cartridge;
FIG. 15 is a partial perspective view of a cartridge housing included in the present disclosure;
FIG. 16 is a vertical sectional view showing a structure in which a hollow fiber membrane cartridge and a membrane humidifier housing are coupled through the bulkhead as a coupling medium;
FIG. 17 is a perspective view of an O-ring and a head seal included in the present disclosure;
FIG. 18 is a perspective view of a pair of bulkheads according to the present disclosure;
FIG. 19 is a horizontal cross-sectional perspective view of a first housing included in the present disclosure;
FIG. 20 is a perspective view of a membrane humidifier for a fuel cell according to another embodiment of the present disclosure;
FIGS. 21 and 22 are an exploded perspective view and a perspective cross-sectional view of a hollow fiber membrane cartridge and a fuel cell membrane humidifier having the same according to the present disclosure;
FIG. 23 is a perspective cross-sectional view of a housing included in a membrane humidifier for a fuel cell according to the present disclosure.
FIG. 24 is a partial perspective view of a cartridge included in a membrane humidifier for a fuel cell according to the present disclosure;
FIGS. 25 and 26 are perspective and cross-sectional views showing a structure in which a hollow fiber membrane and a resin layer are coupled to a cartridge;
FIG. 27 is an exploded perspective view showing the coupling structure of a bulkhead and a cap; and
FIG. 28 is a vertical cross-sectional view of the membrane humidifier for a fuel cell according to the present disclosure, showing the directions in which the wet air and the dry air flow.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. The embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

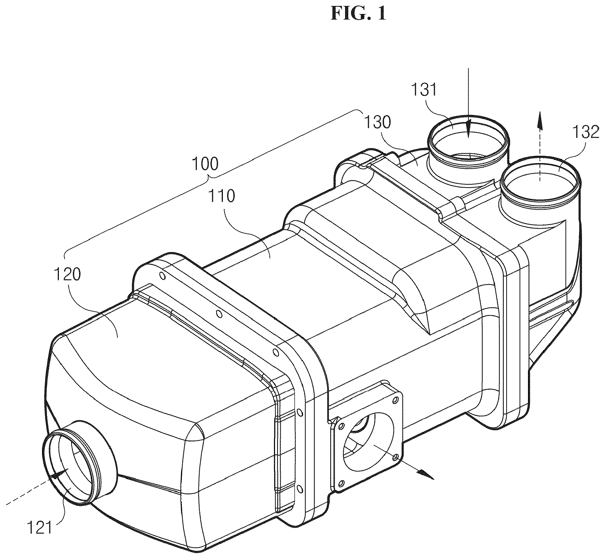

Hereinafter, a membrane humidifier for a fuel cell according to an embodiment of the present disclosure will be described in detail with reference to FIGS. 1 to 10.

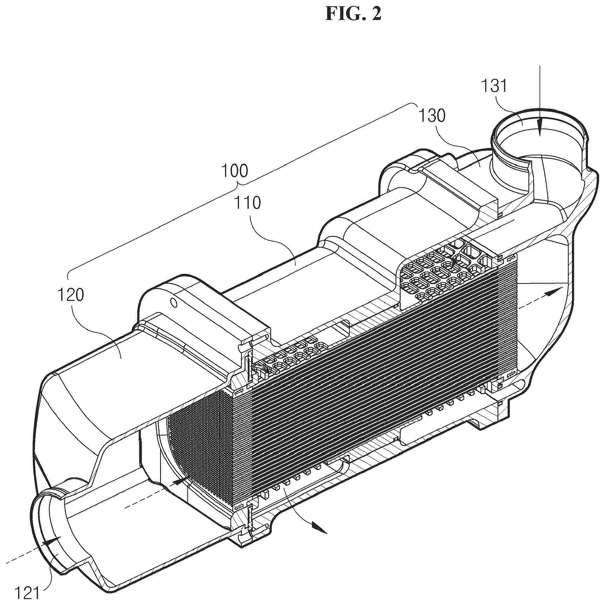

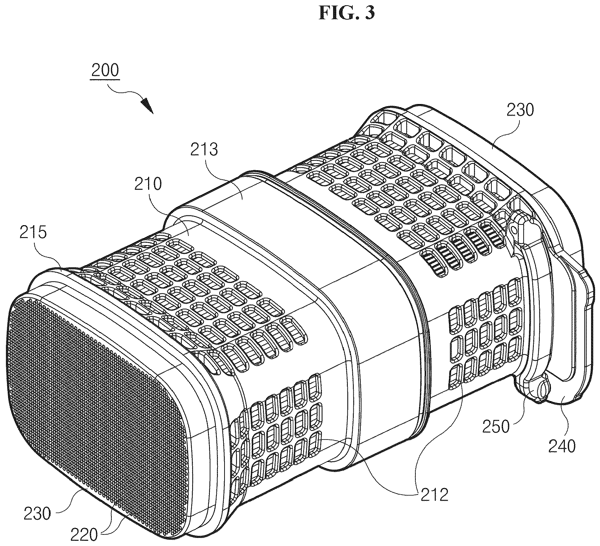

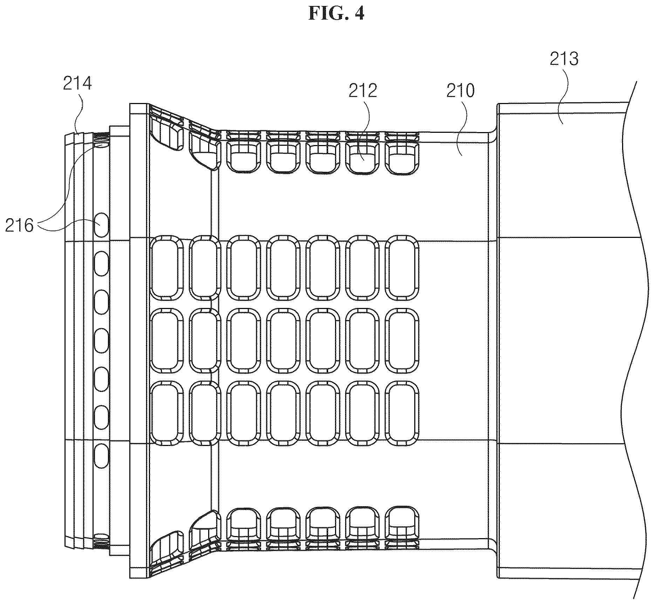

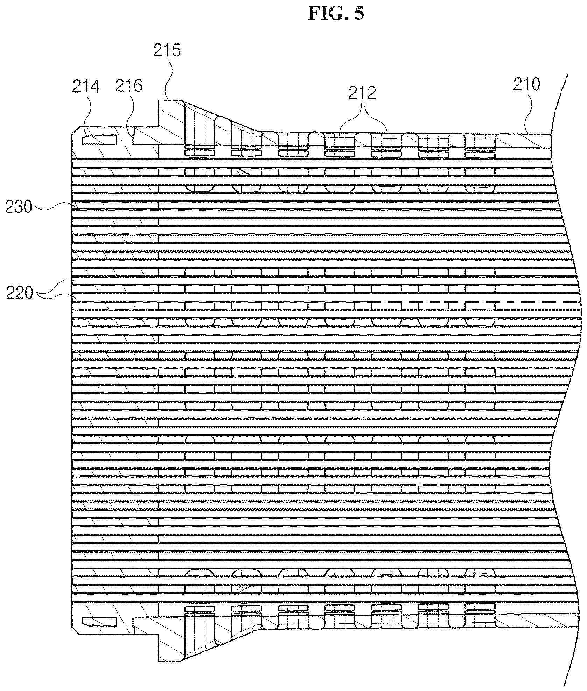

FIGS. 1 and 2 are a perspective view and a cross-sectional perspective view of a membrane humidifier for a fuel cell according to the present disclosure, FIG. 3 is a perspective view of a hollow fiber membrane cartridge included in the present disclosure, and FIG. 4 is a side view of a cartridge housing, and FIG. 5 is a cross-sectional view of a hollow fiber membrane cartridge included in the present disclosure.

The membrane humidifier for fuel cell according to the present disclosure is a type of humidifier configured such that moisture of wet air passing outside a hollow fiber membrane 220 is transferred to dry air passing through the inside of the hollow fiber membrane 220, and the hollow fiber membrane 220 is not integrally coupled to a membrane humidifier housing 100, but is placed inside a hollow fiber membrane cartridge 200 that is detachably coupled to the membrane humidifier housing 100, wherein a bulkhead 500 is mounted on one side of the hollow fiber membrane cartridge 200 in the longitudinal direction thereof, and the one side of the hollow fiber membrane cartridge 200 in the longitudinal direction thereof is inserted into the bulkhead 500.

That is, the membrane humidifier for fuel cell according to the present disclosure includes: the hollow fiber membrane cartridge 200 including a cartridge housing 210 formed in the shape of a hollow tube having openings facing opposite sides in the longitudinal direction and having a plurality of vent holes 212 on the side wall, the hollow fiber membrane 220 inserted into the interior of the cartridge housing 210 such that opposite ends thereof in the longitudinal direction face the openings of the cartridge housing 210, and a resin layer 230 filling the inner space of the cartridge housing 210 on opposite sides thereof in the longitudinal direction such that opposite ends of the hollow fiber membrane 220 in the longitudinal direction thereof are exposed to the outside; a membrane humidifier housing 100 in which the hollow fiber membrane cartridge 200 is provided and which includes a wet air inlet 131 and a wet air outlet 112 communicating with the vent holes 212, and a dry air inlet 121 and dry air outlet 132 communicating with the hollow fiber membrane 220; and a bulkhead 500 which has an outer edge that is mounted to be in close contact with the inner surface of one side of the membrane humidifier housing 100 in the longitudinal direction thereof, and which has a mounting hole 510 which is formed in the central portion thereof and into which one end of the cartridge housing 210 in the longitudinal direction thereof is inserted.

As described above, when the hollow fiber membrane cartridge 200 is mounted on the membrane humidifier housing 100 by using the bulkhead 500 as a coupling medium, the hollow fiber membrane cartridge 200 can be easily assembled or replaced, and in the case where the shape or size of the hollow fiber membrane cartridge 200 is changed, only the bulkhead 500 is replaced and the membrane humidifier housing 100 may be commonly used.

In addition, regarding the membrane humidifier for fuel cell according to the present disclosure, instead of completely filling the inner space of opposite sides of the membrane humidifier housing 100 in the longitudinal direction thereof with the resin layer 230, only the inner space of opposite sides of the cartridge housing 210 in the longitudinal direction thereof is filled with the resin layer 230. Accordingly, the use of resin layer 230, which is expensive, can be significantly reduced, and the manufacturing costs of the product can be reduced.

Meanwhile, the membrane humidifier housing 100 includes: a first housing 110 which is formed in a hollow tube shape with open opposite sides in the longitudinal direction thereof and into which the hollow fiber membrane cartridge 200 is inserted; a second housing 120 coupled to cover one side (left side in this embodiment) of the first housing 110 in the longitudinal direction thereof; and a third housing 130 coupled to cover the other side in the longitudinal direction (the right side in this embodiment) of the first housing 110. The dry air inlet 121 and the dry air outlet 132 may be formed in the second housing 120 and the third housing 130, respectively, and the wet air inlet 131 and the wet air outlet 112 may be formed in the third housing 130 and the first housing 110, respectively.

Therefore, the dry air introduced into the second housing 120 through the dry air inlet 121 passes through the cartridge housing 210 along the flow path inside the hollow fiber membrane 220 and is delivered to the interior of the third housing 130 and then is drawn out through the dry air outlet 132 (see the dotted arrow). In addition, the wet air introduced into the interior of the third housing 130 through the wet air inlet 131 flows into the interior of the hollow fiber membrane cartridge 200 through the vent holes 212 of the hollow fiber membrane cartridge 200 and then flows, while in contact with the outer surface of the hollow fiber membrane 220, through the wet air outlet 112 of the first housing 110.

On the other hand, a protruding rib 213 may be formed on an outer surface of a middle portion of the cartridge housing 210 in the longitudinal direction thereof and divides the inner space of the membrane humidifier housing 100 into a front portion and a rear portion of the membrane humidifier housing 100, and the vent holes 212 are formed on one side wall of the cartridge housing 210 in the longitudinal direction thereof and another side wall thereof in the longitudinal direction thereof with respect to the protruding rib 213. The wet air introduced through the wet air inlet 131 is not directly discharged through the wet air outlet 112. Instead, the wet air may be introduced into the interior of the cartridge housing 210 through the vent holes 212 formed on the side wall of rear portion of the cartridge housing 210 (right side in this embodiment) and may flow toward the frontward, and then, passing through the vent holes 212 formed on the side wall of the front portion of the cartridge housing 210 (left side in this embodiment), the wet air is discharged through the wet air outlet 112 of the first housing 110.

As such, when the dry air flows while in contact with the inner surface of the hollow fiber membrane 220 and the wet air flows while in contact with the outer surface of the hollow fiber membrane 220, the moisture in the wet air is transferred to the dry air so that the dry air may be humidified. This humidification principle is the same as of the related art, and thus a detailed description thereof will be omitted.

In this regard, in this embodiment, the membrane humidifier housing 100 includes three housings, that is, the first housing 110, the second housing 120, and the third housing 130. However, in one or more embodiments, the membrane humidifier housing 100 may consist of two housings or four or more housings, or a single housing.

Meanwhile, to prevent the resin layer 230 coupled to the cartridge housing 210 from being easily removed from the cartridge housing 210, the cartridge housing 210 includes a locking protrusion 214 and a cartridge flange 215. The locking protrusion 214 is formed entirely over opposite ends of the cartridge housing 210 in the longitudinal direction and protrudes outward (specifically, toward the direction in which the protrusion is made along the lateral direction of the cartridge housing 210), and the cartridge flange 215 is formed at a point spaced a certain distance from the locking protrusion 214.

At this time, the locking protrusion 214 is provided to be completely embedded in the resin layer 230. Accordingly, even when the resin layer 230 is not fixed on the surface of the cartridge housing 210 and peeled off, as long as the locking protrusion 214 is damaged, the coupling of the resin layer 230 to the cartridge housing 210 may be maintained.

Furthermore, of the side wall of the cartridge housing 210, in a portion between the locking protrusion 214 and the cartridge flange 215, a plurality of through-holes 216, which is to be filled with the resin layer 230, may be formed. The resin layer 230 is initially in a liquid state, and when in contact with the cartridge housing 210, undergoes a curing process to be integrally coupled to the cartridge housing 210. As described above, when the through-holes 216 are formed in a portion of the side wall of the cartridge housing 210 surrounded by the resin layer 230, the resin layer 230, which is a liquid state, fills the through-holes 216 in the process in which the resin layer 230 is brought into contact with the cartridge housing 210. As a result, the bonding strength between the resin layer 230 and the cartridge housing 210 is very high.

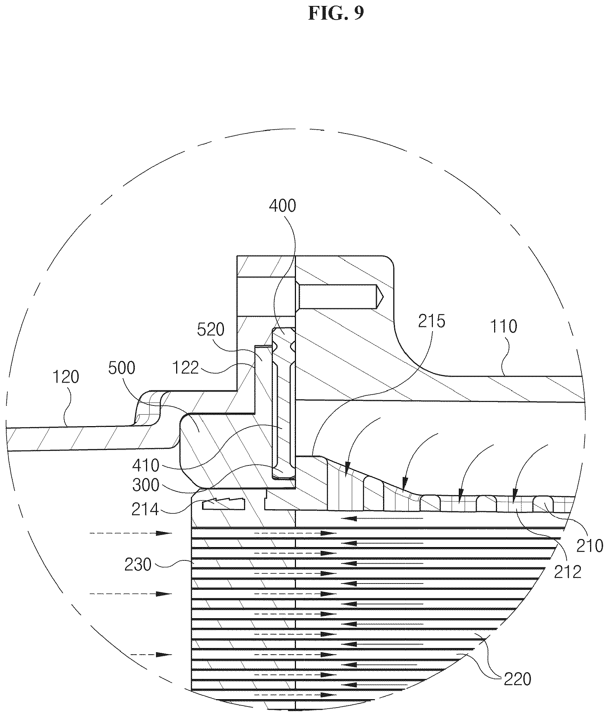

In addition, the cartridge flange 215 is a component for limiting the distance at which the hollow fiber membrane cartridge 200 is inserted into the bulkhead 500, and the seating structure and function of the cartridge flange 215 will be described in detail with reference to FIG. 9.

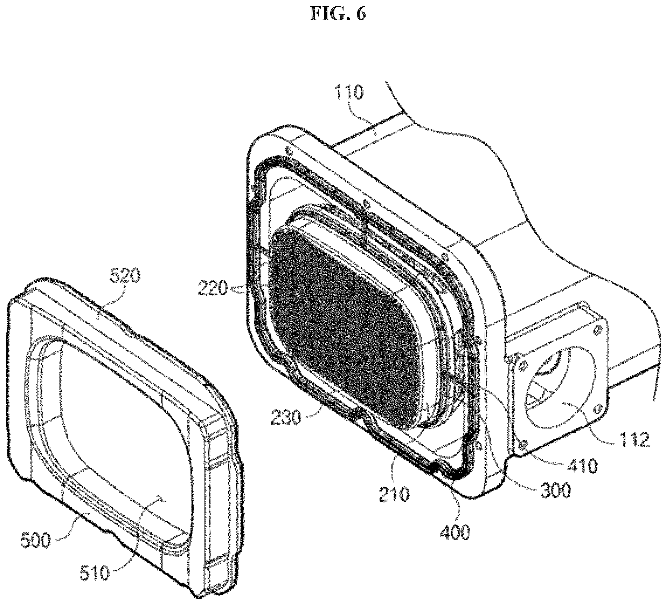

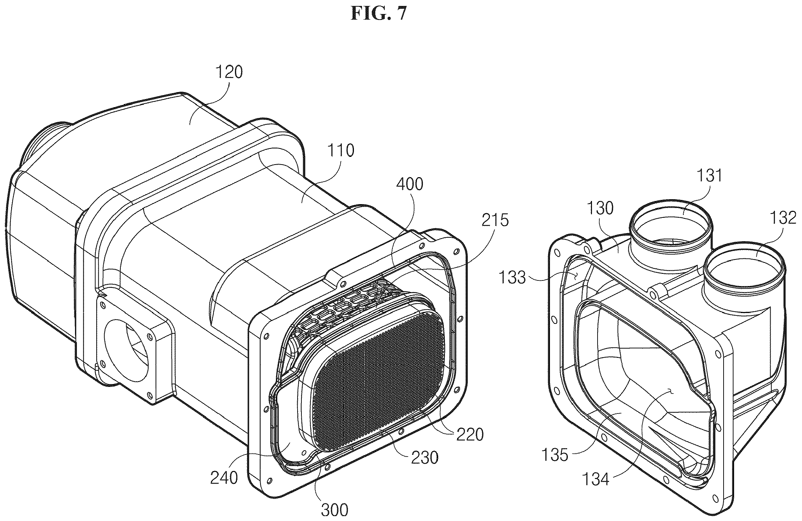

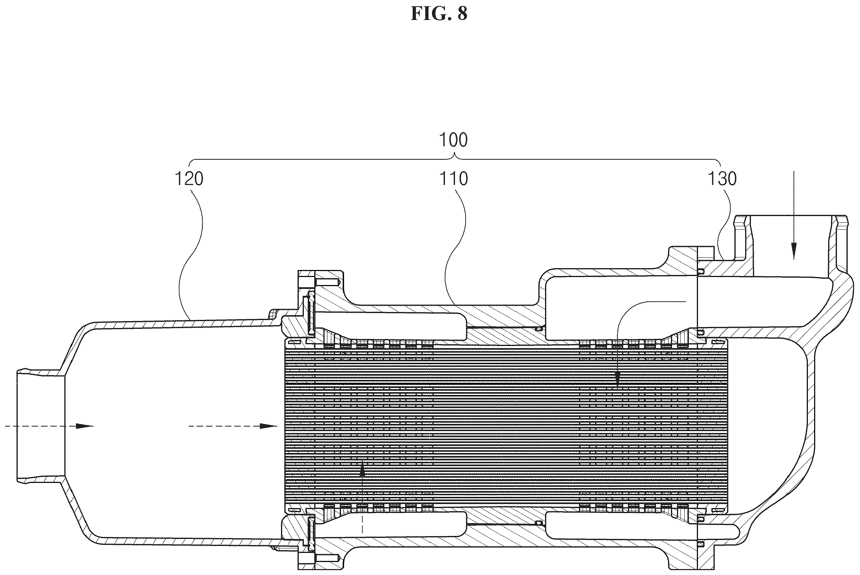

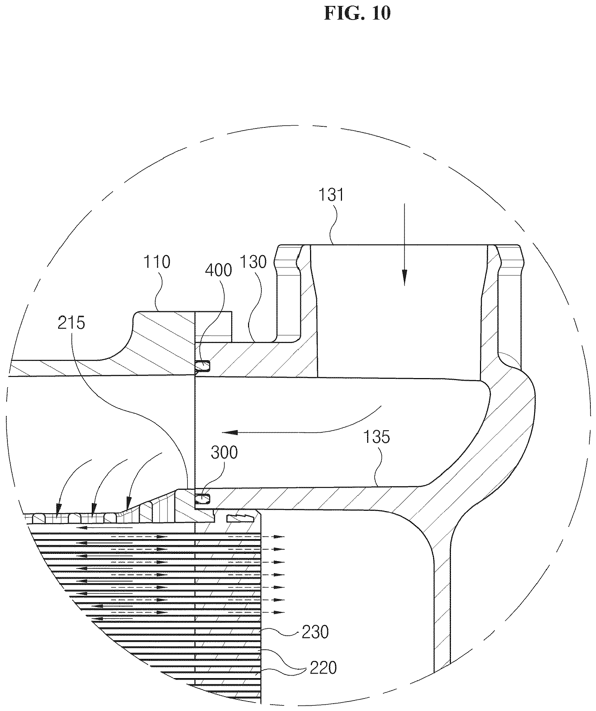

FIG. 6 is an exploded perspective view showing the coupling structure of the bulkhead 500 and the first housing 110, FIG. 7 is an exploded perspective view showing the coupling structure of the first housing 110 and the third housing 130, FIG. 8 is a cross-sectional view of a membrane humidifier for a fuel cell according to the present disclosure, and FIGS. 9 and 10 are cross-sectional views showing the sealing structure of the membrane humidifier housing 100.

As illustrated in FIG. 6, a head flange 520 extending at a right angle is formed on a portion of the outer surface of the bulkhead 500 adjacent to the hollow fiber membrane cartridge 200, and the head flange 520 is pressed and fixed between the first housing 110 and the second housing 120.

At this time, the cartridge flange 215 of the cartridge housing 210 may be in close contact with the surface (the right surface in this embodiment) of the bulkhead 500 as illustrated in FIG. 9, and in this regard, an O-ring 300 may be press-fitted at the contact surface between the cartridge flange 215 and the bulkhead 500 to prevent the leakage of air through the contact surface between the cartridge flange 215 and the bulkhead 500.

On the other hand, the second housing 120 is provided with a seating groove in which the head flange 520 is seated, and the head flange 520 is coupled to the second housing 120 such that the head flange 520 is completely embedded in the seating groove. In addition, the first housing 110 is coupled to cover
a surface of the head flange 520 that faces the first housing 110 (a right side in this embodiment) and a surface of the second housing 120 facing the first housing 110 (the right side in this embodiment), and a head seal 400 may be press-fitted at a point where the first housing 110, the second housing 120, and the head flange 520 meet each other to prevent the leakage of air.

At this time, when the O-ring 300 and the head seal 400 are manufactured and installed as separate components, the O-ring 300 and the head seal 400 need to be installed separately, which results in a long assembling time. Also, during the O-ring 300 is installed, the location of the head seal 400 may be changed, and during the head seal 400 is installed, the location of the O-ring 300 may be changed, which leads to an assembly defect problem. Therefore, the O-ring 300 and the head seal 400 may be integrally connected by a plurality of bridges 410 as shown in this embodiment.

The third housing 130 has two air paths, that is, the wet air inlet 131 and the dry air outlet 132, and to prevent the contact between the wet air passing through the wet air inlet 131 and the dry air passing through the dry air outlet 132, the third housing 130 includes a wet airflow path 133 and a dry airflow path 134 which are separated from each other by a flow path dividing plate 135. In this case, the wet airflow path 133 is configured to allow the space between the cartridge housing 210 and the membrane humidifier housing 100 to communicate with the wet air inlet 131. In addition, the dry airflow path 134 is configured to allow the other end of the hollow fiber membrane cartridge 200 in the longitudinal direction thereof to communicate with the dry air outlet 132.

In addition, to prevent the dry air that has passed through the interior of the hollow fiber membrane 220 from entering the wet airflow path 133, an extension plate 240 may be formed on the other longitudinal side of the cartridge housing 210. The extension plate 240 may extend in the radial direction of the hollow fiber membrane 220 to cover the dry airflow path 134. The extension plate 240 is coupled to and in close contact with the end of the flow path dividing plate 135 that separates the wet airflow path 133 and the dry airflow path 134 from each other. Accordingly, the dry air that has passed through the hollow fiber membrane 220 and the wet air that has entered the wet airflow path 133 may not come into direct contact with each other.

Meanwhile, when wet air is in indirect contact with dry air with the hollow fiber membrane 220 therebetween and the wet air and the dry air exchange moisture, moisture condenses in the interior of the hollow fiber membrane 220 and falls down, and accordingly, condensed water may be deposited on the bottom of the dry airflow path 134. When the flow rate of condensed water collected at the bottom of dry airflow path 134 increases above a certain level, humidity exchange between wet air and dry air may not be performed normally, and the membrane humidifier may be damaged.

Therefore, the membrane humidifier for fuel cell according to the present disclosure may include a bypass flow path for discharging the condensed water collected at the bottom of the dry airflow path 134 to the space between the cartridge housing 210 and the membrane humidifier housing 100. The bypass flow path may have one end that is located near the bottom of the dry airflow path 134, and another end that is located above the cartridge housing 210.

At this time, since the pressure of the interior of the dry airflow path 134 is higher than the pressure of the interior of the wet airflow path 133, the condensed water collected at the bottom of the dry airflow path 134 goes up along the bypass flow path and is discharged to the space between the cartridge housing 210 and the membrane humidifier housing 100. The bypass flow path applied to this disclosure is not manufactured as a separate metal tube, but is integrally molded with the cartridge housing 210. Accordingly, separate manufacturing costs or assembly costs may not occur.

The other side of the cartridge housing 210 in the longitudinal direction thereof (the right side in this embodiment) may be mounted directly on the third housing 130 rather than on the third housing 130 through a separate bulkhead 500 as a coupling medium. That is, the cartridge flange 215 located on the other longitudinal side of the cartridge housing 210 is in close contact with the end of the flow path dividing plate 135 as illustrated in FIG. 10, and to seal the contact portion between the cartridge flange 215 and the flow path dividing plate 135, the O-ring 300 may be provided between the cartridge flange 215 and the flow path dividing plate 135. Similarly, the head seal 400 may be provided at a portion where the first housing 110 contacts the third housing 130, and the head seal 400 may be connected to and integrally formed with the O-ring 300 to increase the convenience of the assembly process.

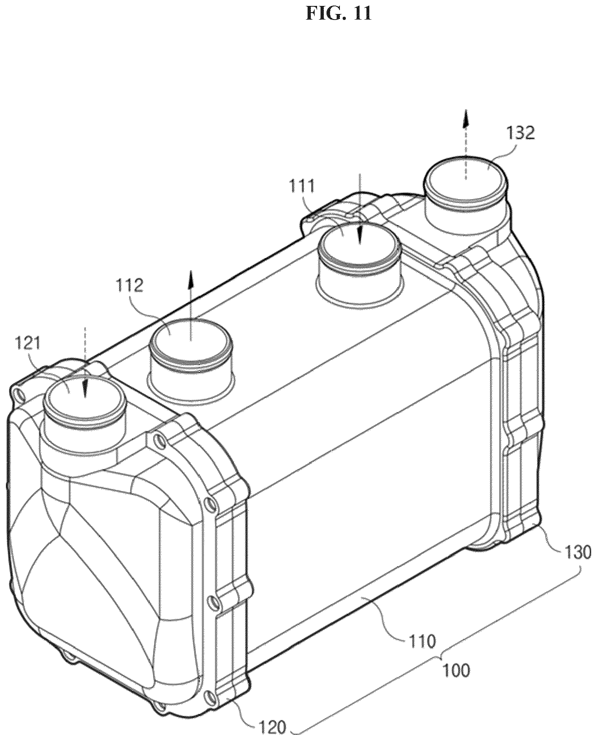

Hereinafter, a membrane humidifier for a fuel cell according to another embodiment of the present disclosure will be described in detail with reference to FIGS. 11 to 19.

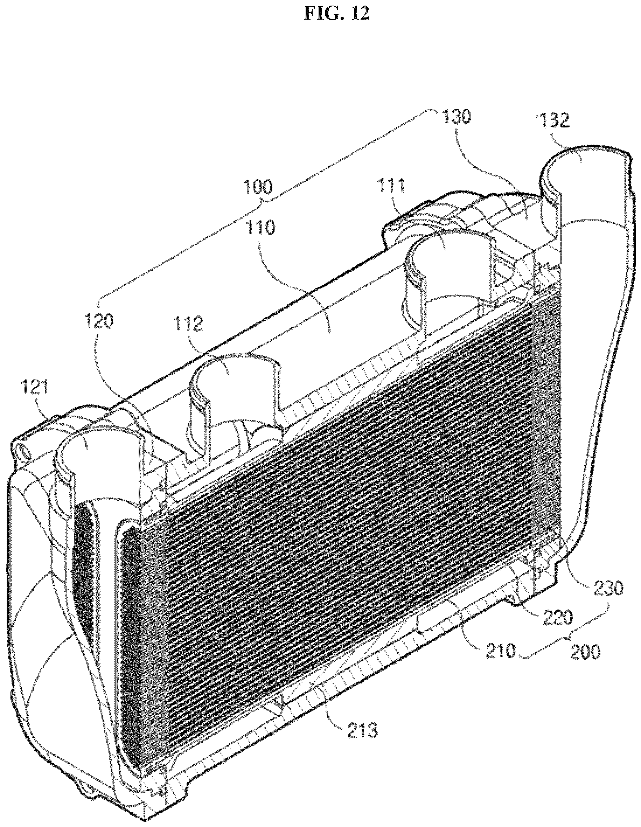

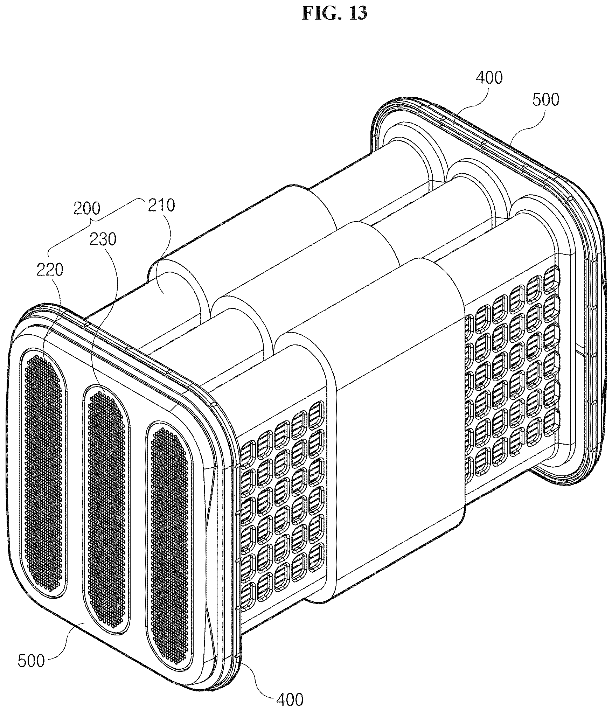

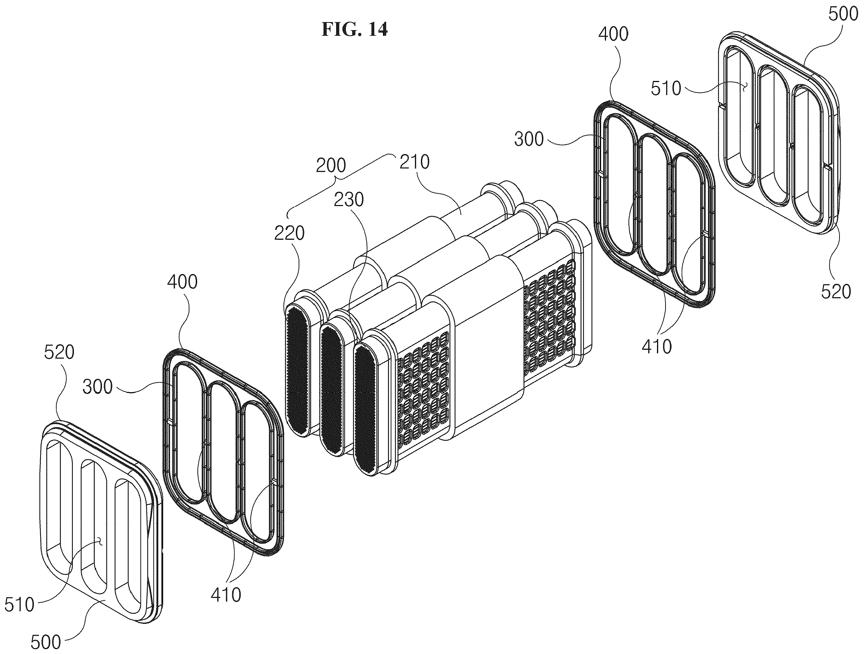

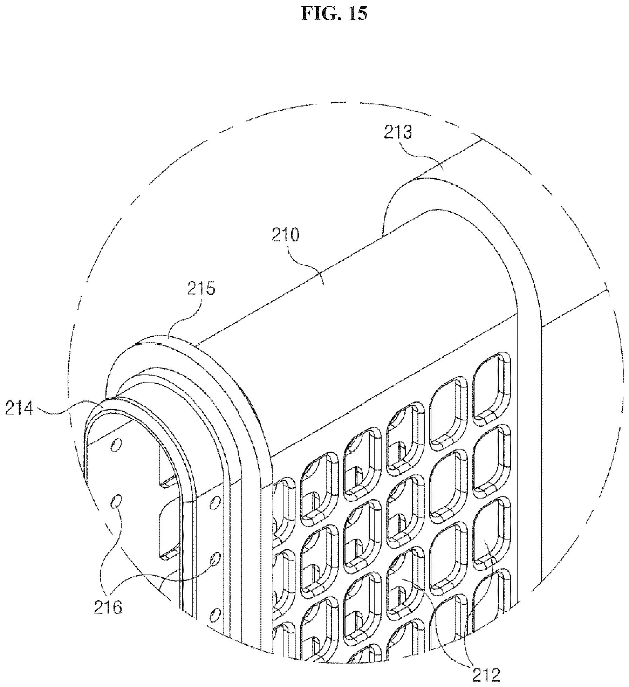

FIGS. 11 and 12 are a perspective view and a cross-sectional perspective view of a membrane humidifier for a fuel cell according to the present disclosure, FIGS. 13 and 14 are a perspective view and an exploded perspective view showing a structure in which the bulkhead is coupled to opposite ends of the hollow fiber membrane cartridge 200, and FIG. 15 is a partial perspective view of the cartridge housing 210 included in the present disclosure.

The membrane humidifier for fuel cell according to the present disclosure is a type of humidifier configured such that moisture of wet air passing outside a hollow fiber membrane 220 is transferred to dry air passing through the inside of the hollow fiber membrane 220, and the hollow fiber membrane 220 is not integrally coupled to the membrane humidifier housing 100, but is placed inside the hollow fiber membrane cartridge 200 that is detachably coupled to the membrane humidifier housing 100, wherein a plurality of hollow fiber membrane cartridges 200 are provided in the interior of a single membrane humidifier housing 100.

That is, the membrane humidifier for fuel cell according to the present disclosure includes: a plurality of hollow fiber membrane cartridges 200, each including a cartridge housing 210 formed in the shape of a hollow tube having openings facing opposite sides in the longitudinal direction and having a plurality of vent holes 212 on the side wall, the hollow fiber membrane 220 inserted into the interior of the cartridge housing 210 such that opposite ends thereof in the longitudinal direction face the openings of the cartridge housing 210, and a resin layer 230 filling the inner space of the cartridge housing 210 on opposite sides thereof in the longitudinal direction such that opposite ends of the hollow fiber membrane 220 in the longitudinal direction thereof are exposed to the outside; a membrane humidifier housing 100 in which the hollow fiber membrane cartridges 200 are provided and which includes a wet air inlet 111 and a wet air outlet 112 communicating with the vent holes 212, and a dry air inlet 121 and dry air outlet 132 communicating with the hollow fiber membrane 220; and a pair of bulkheads 500 which have edges that are mounted so as to be in close contact with the inner surfaces of opposite sides of the membrane humidifier housing 100 in the longitudinal direction thereof, and each of which has a plurality of mounting holes 510 which is formed in the central portion thereof and into which ends of the cartridge housings 210 in the longitudinal direction thereof are inserted.

As described above, when the hollow fiber membrane cartridges 200 are provided in the membrane humidifier housing 100 using the bulkhead 500 as a coupling medium, since the number of the hollow fiber membrane cartridges 200, which are mountable, may be increased or decreased by increasing or decreasing the number of mounting holes 510 formed in the bulkhead 500, the degree of freedom of the specification and number of the hollow fiber membrane cartridges 200 can be increased while commonly using the membrane humidifier housing 100. In this embodiment, only a case in which three hollow fiber membrane cartridges 200 are provided on a pair of bulkheads 500 is illustrated, but the number of hollow fiber membrane cartridges 200 provided on a pair of bulkheads 500 may be 2 or 4 or more.

In addition, when the opposite ends of the hollow fiber membrane cartridge 200 in the longitudinal direction thereof are provided on the bulkhead 500 in the fitting manner, the assembly of the hollow fiber membrane cartridge 200 is facilitated and productivity is improved, and the replacement of the hollow fiber membrane cartridge 200 is simplified and thus the use thereof is convenient.

In addition, regarding the membrane humidifier for fuel cell according to the present disclosure, instead of completely filling the inner space of opposite sides of the membrane humidifier housing 100 in the longitudinal direction thereof with the resin layer 230, only the inner space of opposite sides of the cartridge housing 210 in the longitudinal direction thereof is filled with the resin layer 230. Accordingly, the use of resin layer 230, which is expensive, can be significantly reduced, and the manufacturing costs of the product can be reduced.

Meanwhile, the membrane humidifier housing 100 includes: a first housing 110 which is formed in a hollow tube shape with open opposite sides in the longitudinal direction thereof and into which the hollow fiber membrane cartridge 200 is inserted; a second housing 120 coupled to cover one side (left side in this embodiment) of the first housing 110 in the longitudinal direction thereof; and a third housing 130 coupled to cover the other side in the longitudinal direction (the right side in this embodiment) of the first housing 110. The wet air inlet 111 and the wet air outlet 112 may be formed in the first housing 110, the dry air inlet 121 may be formed in the second housing 120, and the dry air outlet 132 may be formed in the third housing 130.

Therefore, the dry air introduced into the second housing 120 through the dry air inlet 121 passes through the cartridge housing 210 along the flow path inside the hollow fiber membrane 220 and is delivered to the interior of the third housing 130 and then is drawn out through the dry air outlet 132 (see the dotted arrow). In addition, the wet air flowing into the interior of the rear side (right side in this embodiment) of the first housing 110 through the wet air inlet 111, enters the interior of the hollow fiber membrane cartridge 200 through the vent holes 212 and flows while being in contact with the outer surface of the hollow fiber membrane 220, and is discharged to the outside through the wet air outlet 112.

Meanwhile, protruding ribs 213 may be formed on an outer surface of a middle portion of the cartridge housing 210 in the longitudinal direction thereof and may divide the inner space of the membrane humidifier housing 100 into a front portion and a rear portion of the membrane humidifier housing 100, and the vent holes 212 are formed on one side wall of the cartridge housing 210 in the longitudinal direction thereof and another side wall opposite to the side wall in the longitudinal direction thereof with respect to the protruding rib 213. The wet air introduced through the wet air inlet 111 is not directly discharged through the wet air outlet 112. Instead, the wet air may be introduced into the interior of the cartridge housing 210 through the vent holes 212 formed on the side wall of rear portion of the cartridge housing 210 (right side in this embodiment) and may flow toward the frontward, and then, passing through the vent holes 212 formed on the side wall of the front portion of the cartridge housing 210 (left side in this embodiment), the wet air is discharged through the wet air outlet 112.

As such, when the dry air flows while in contact with the inner surface of the hollow fiber membrane 220 and the wet air flows while in contact with the outer surface of the hollow fiber membrane 220, the moisture in the wet air is transferred to the dry air so that the dry air may be humidified. This humidification principle is the same as of the related art, and thus a detailed description thereof will be omitted.

In this regard, in this embodiment, the membrane humidifier housing 100 includes three housings, that is, the first housing 110, the second housing 120, and the third housing 130. However, in one or more embodiments, the membrane humidifier housing 100 may consist of two housings or four or more housings, or a single housing.

Meanwhile, to prevent the resin layer 230 coupled to the cartridge housing 210 from being easily removed from the cartridge housing 210, the cartridge housing 210 includes a locking protrusion 214 and a cartridge flange 215. The locking protrusion 214 may be formed entirely over opposite ends of the cartridge housing 210 in the longitudinal direction and protrudes outward (specifically, toward the direction in which the protrusion is made along the lateral direction of the cartridge housing 210), and the cartridge flange 215 may be formed at a point spaced a certain distance from the locking protrusion 214.

At this time, the locking protrusion 214 is provided to be completely embedded in the resin layer 230. Accordingly, even when the resin layer 230 is not fixed on the surface of the cartridge housing 210 and peeled off, as long as the locking protrusion 214 is damaged, the coupling of the resin layer 230 to the cartridge housing 210 may be maintained.

Furthermore, of the side wall of the cartridge housing 210, in a portion between the locking protrusion 214 and the cartridge flange 215, a plurality of through-holes 216, which is to be filled with the resin layer 230, may be formed. The resin layer 230 is initially in a liquid state, and when in contact with the cartridge housing 210, undergoes a curing process to be integrally coupled to the cartridge housing 210. As described above, when the through-holes 216 are formed in a portion of the side wall of the cartridge housing 210 surrounded by the resin layer 230, the resin layer 230, which is a liquid state, fills the through-holes 216 in the process in which the resin layer 230 is brought into contact with the cartridge housing 210. As a result, the bonding strength between the resin layer 230 and the cartridge housing 210 is very high.

In addition, the cartridge flange 215 formed on opposite sides of the cartridge housing 210 in the longitudinal direction thereof is a component for limiting the distance by which the hollow fiber membrane cartridge 200 is inserted into the bulkhead 500, and the seating structure and function of the cartridge flange 215 will be separately described in detail with reference to different drawings.

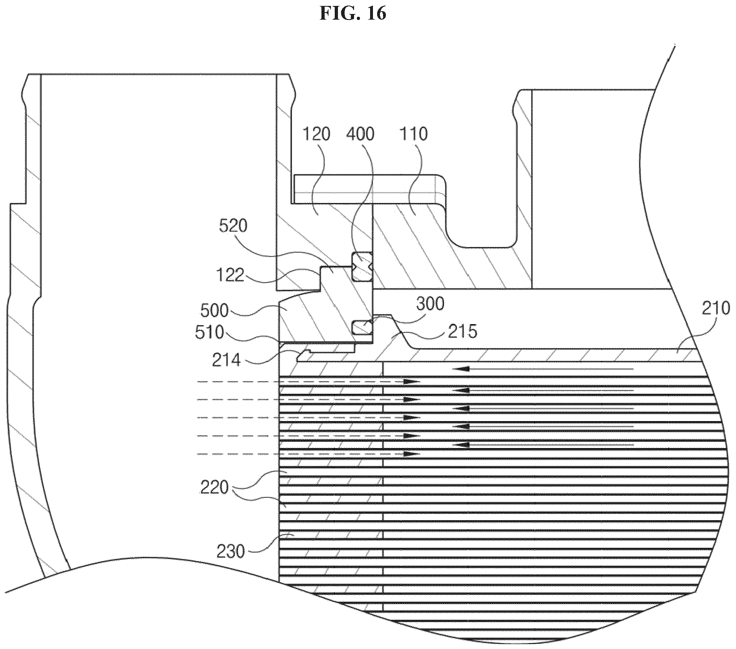

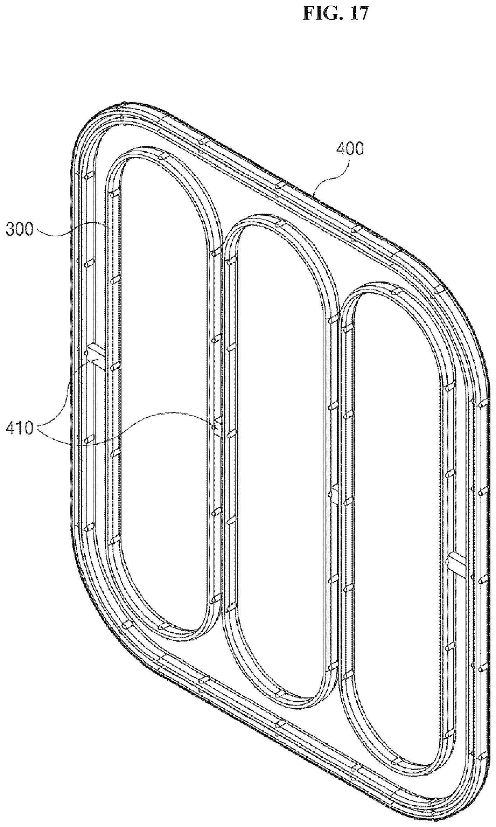

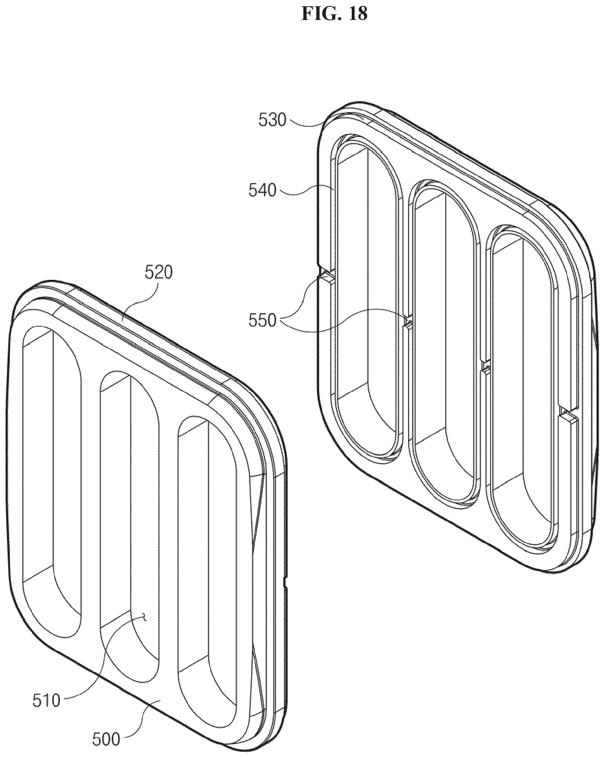

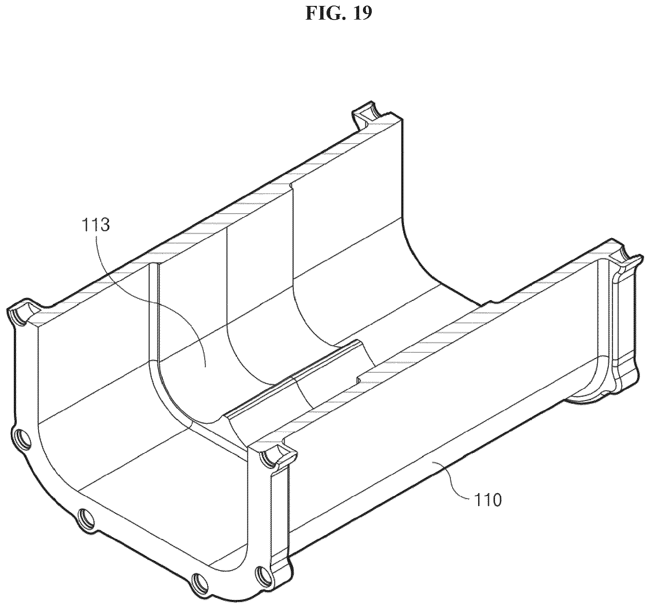

FIG. 16 is a vertical cross-sectional view showing a structure in which a hollow fiber membrane cartridge 200 and a membrane humidifier housing 100 are coupled to each other using the bulkhead 500 as a coupling medium, FIG. 17 is a perspective view of the O-ring 300 and the head seal 400 included in the present disclosure, FIG. 18 is a perspective view of a pair of bulkheads 500 according to the present disclosure, and FIG. 19 is a horizontal cross-sectional perspective view of the first housing 110 included in the present disclosure.

The hollow fiber membrane cartridge 200 is coupled to the bulkhead 500 in such a manner that opposite ends of the hollow fiber membrane cartridge 200 in the longitudinal direction thereof are inserted into the mounting holes 510 of the bulkhead 500. In this regard, to limit the distance by which the hollow fiber membrane cartridge 200 is inserted, the cartridge flange 215 is formed on each of the opposite sides of the cartridge housing 210 in the longitudinal direction thereof. The cartridge flange 215 is in close contact with the surface of the bulkhead 500 (the right surface in this embodiment) when the end of the hollow fiber membrane cartridge 200 is inserted by a certain depth into the mounting holes 510. Accordingly, the hollow fiber membrane cartridge 200 may not be more inserted into the mounting holes 510.

At this time, the O-ring 300 may be press-fitted between the contact surface between the cartridge flange 215 and the bulkhead 500 to prevent the air from leaking at the contact surface of the cartridge flange 215 and the bulkhead 500. The O-ring 300 is provided for each of the cartridge flange 215. Accordingly, when three hollow fiber membrane cartridges 200 are provided as in this embodiment, a total of six O-rings 300 may be required.

In addition, the pair of bulkheads 500 each have a head flange 520 extending from a portion of the outer surface thereof being adjacent to the hollow fiber membrane cartridge 200, and the second housing 120 and the third housing 130 each have a flange seating groove in which the head flange 520 is seated. The end of the first housing 110 in the longitudinal direction thereof is coupled to cover the head flange 520 seated in the flange seating groove, the head seal 400 is press-fitted at a point where the first housing 110, the second housing 120, and the head flange 520 meet, and a point where the first housing 110, the third housing 130, and the head flange 520 meet.

When the head seal 400 is provided at the point where the three components meet as described above, sealing is performed at once in-between the first housing 110 and the second housing 120, in-between the first housing 110 and the head seal 400, and in-between the second housing 120 and the head seal 400. Accordingly, the number of parts for the membrane humidifier housing 100 is reduced and the interior configuration may be simplified.

At this time, in this embodiment, only the structure in which the first housing 110 is coupled to cover the head flange 520 seated in the flange seating groove of the second housing 120 is illustrated. However, a structure in which the first housing 110 is coupled to cover the head flange 520 seated in the flange seating groove of the third housing 130 is substantially the same as the structure of FIG. 16, except that only the direction is opposite. Accordingly, a detailed description thereof will be omitted.

At this time, when the O-ring 300 and the head seal 400 are manufactured and installed as separate components, the O-ring 300 and the head seal 400 need to be installed separately, which results in a long assembling time. Also, during the O-ring 300 is installed, the location of the head seal 400 may be changed, and during the head seal 400 is installed, the location of the O-ring 300 may be changed, which leads to an assembly defect problem. Therefore, three O-rings 300 and one head seal 400 may be integrally connected by a plurality of bridges 410 as shown in this embodiment. In one or more embodiments, when two hollow fiber membrane cartridges 200 are provided in the interior of one membrane humidifier housing 100, two O-rings 300 and one head seal 400 are connected by bridges 410, and when four hollow fiber membrane cartridges 200 are provided in the interior of the membrane humidifier housing 100, four O-rings 300 and one head seal 400 may be connected by bridges 410. That is, the number of O-rings 300 connected to one head seal 400 by bridges 410 may vary depending on the number of the hollow fiber membrane cartridges 200.

In this regard, to allow the head seal 400, the O-ring 300, and the bridges 410 to be stably seated in the bulkhead 500, a head seal seating groove 530, an O-ring seating groove 540, and a bridge seating groove 550 may be separately formed on a surface of the outer surface of the bulkhead 500 facing the center of the hollow fiber membrane cartridge 200.

The hollow fiber membrane cartridges 200 are provided in the interior of the membrane humidifier housing 100 in such a manner that protruding ribs 213 are arranged in a stacked structure in close contact with each other. When, as illustrated in the present embodiment, the cross section of the protruding ribs 213 is formed in an elliptical shape and the inner surface of the first housing 110 is formed to be flat, the outer surface of the protruding ribs 213 and the inner surface of the first housing 110 may not be sealed.

Accordingly, hollow blocks 113 may be formed in a portion of the inner surface of the first housing 110 corresponding to the protruding ribs 213 in such a manner that the protruding ribs 213 stacked in close contact with each other are inserted thereinto in a fitting manner. The inner surface of the hollow block 113 may be conformed to the shape of the protruding ribs 213. Accordingly, when the protruding ribs 213 are inserted into the hollow blocks 113 in the fitting manner, the outer surface of the protruding ribs 213 may be completely pressed on the inner surface of the hollow blocks 113.

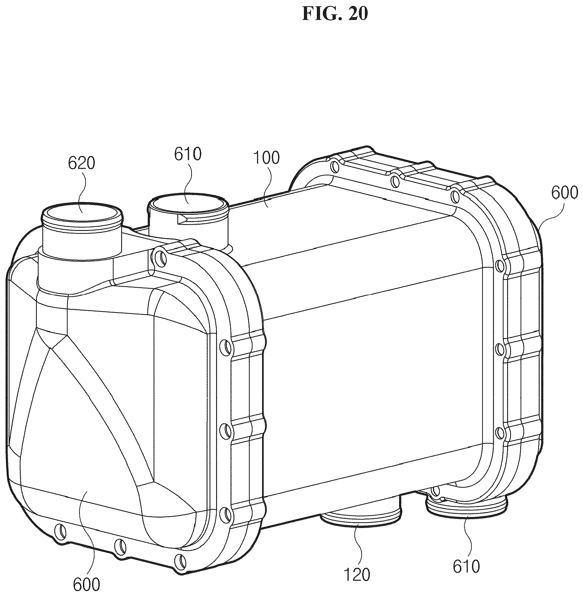

Hereinafter, a membrane humidifier for a fuel cell according to another embodiment of the present disclosure will be described in detail with reference to FIGS. 20 to 28.

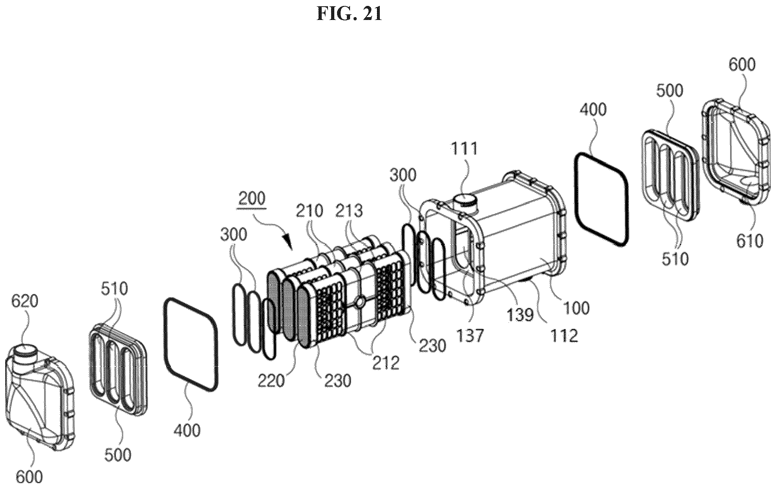

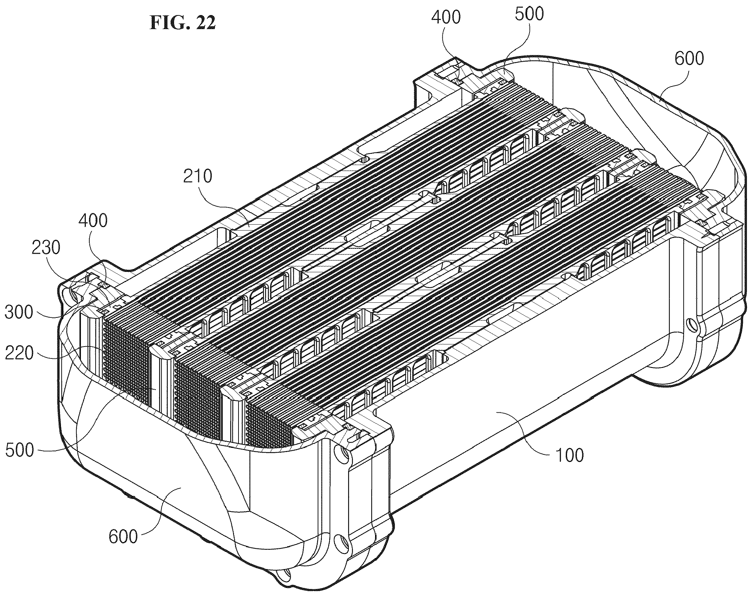

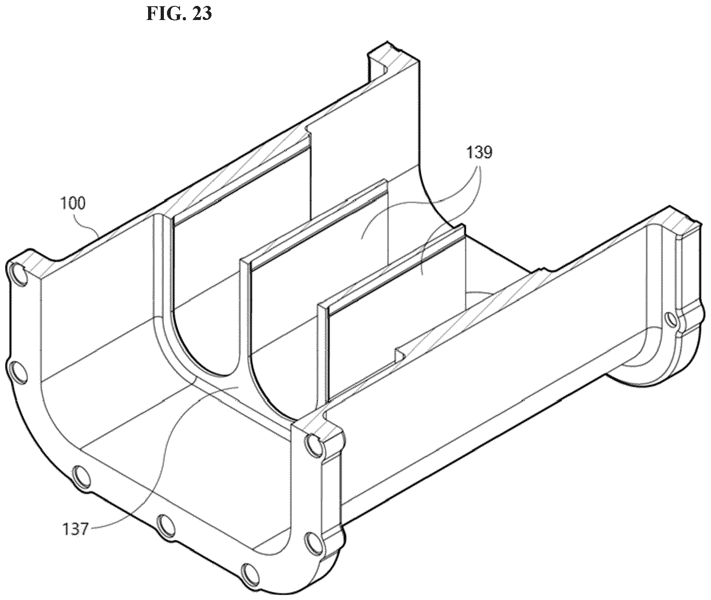

FIG. 20 is a perspective view of a membrane humidifier for a fuel cell according to the present disclosure, FIGS. 21 and 22 are an exploded perspective view and a perspective cross-sectional view of the hollow fiber membrane cartridge 200 and a fuel cell membrane humidifier having the same according to the present disclosure, and FIG. 23 is a perspective cross-sectional view of a housing included in a membrane humidifier for a fuel cell according to the present disclosure.

The membrane humidifier for fuel cell according to the present disclosure is a humidifier configured such that moisture of wet air passing outside a hollow fiber membrane 220 is transferred to dry air passing through the inside of the hollow fiber membrane 220, and the hollow fiber membrane 220 is not integrally coupled to the membrane humidifier housing 100, but the hollow fiber membrane 220 is provided in a separate hollow fiber membrane cartridge 200, and the hollow fiber membrane cartridge 200 is detachably coupled to the cartridge housing 210.

The hollow fiber membrane cartridge 200 according to the present disclosure is formed in the shape of a hollow tube having openings facing the front and rear directions, and is detachably provided in the interior of the membrane humidifier housing 100, and includes: one or more cartridge housings 210 each having a side wall with a plurality of vent holes 212 therein; a hollow fiber membrane 220 inserted into the interior of each of the cartridge housing 210; and a resin layer 230 which fills the inner space of opposite sides of the cartridge housing 210 in the longitudinal direction thereof so as to allow opposite ends of the hollow fiber membrane 220 in the longitudinal direction thereof to be exposed to the outside, and which covers the opposite ends and outer surfaces of opposite sides of the cartridge housing 210 in the longitudinal direction thereof.

In addition, the membrane humidifier for fuel cell according to the present disclosure includes, as basic components, a hollow fiber membrane cartridge 200 configured as described above, and the membrane humidifier housing 100 which is formed in the shape of a hollow tube having openings facing the front and rear directions, and which has the wet air inlet 111 and the wet air outlet 112 on side walls on opposite sides thereof in the longitudinal direction thereof.

As described above, in the membrane humidifier for fuel cell according to the present disclosure, a plurality of hollow fiber membrane cartridges 200 are detachably coupled to the membrane humidifier housing 100. Accordingly, when the hollow fiber membrane 220 included in any one of the hollow fiber membrane cartridges 200 is damaged, only the corresponding hollow fiber membrane cartridge 200 is replaced and all other parts can be utilized. That is, the maintenance costs are significantly reduced.

In addition, regarding the membrane humidifier for fuel cell according to the present disclosure, instead of completely filling the inner space of opposite sides of the membrane humidifier housing 100 in the longitudinal direction thereof with the resin layer 230, only the inner space of opposite sides of the cartridge housing 210 in the longitudinal direction thereof is filled with the resin layer 230. Accordingly, the use of resin layer 230, which is expensive, can be significantly reduced, and the manufacturing costs of the product can be reduced.

The membrane humidifier housing 100 is formed in a hollow tube shape in which opposite sides thereof in the longitudinal direction thereof are open, a pair of bulkheads 500 are coupled to the openings on opposite sides of the membrane humidifier housing 100, and a pair of caps 600, respectively having a dry air outlet 620 and a dry air inlet 610, are coupled to cover the outside of the pair of bulkheads 500. At this time, the bulkheads 500 are each formed with the mounting holes 510 into which the end of the cartridge housing 210 in the longitudinal direction thereof is inserted.

Therefore, the dry air introduced into each of the interior of the caps 600 through the dry air inlet 610 passes through the cartridge housing 210 along the flow path of the interior of the hollow fiber membrane 220 and is delivered to the interior of the other cap 600 through the cartridge housing 210, and then, discharged to the outside through the dry air outlet 620.

In addition, since protruding ribs 213 that divide the inner space of the membrane humidifier housing 100 into front and rear portions thereof, are formed on the outer surface of the middle portion of the cartridge housing 210 in the longitudinal direction thereof, the wet air introduced into the wet air inlet 111 is not discharged directly through the wet air outlet 112, but flows into the interior of the cartridge housing 210 through the vent holes 212 formed on the side wall of the front side (left in this embodiment) of the cartridge housing 210 to flow the rearwards, and then drawn out to the interior of the cap 600 on the rear side through the vent holes 212 formed on the side wall of the rear side (right side in this embodiment) of the cartridge housing 210 and then discharged to the outside through the wet air outlet 112.

As such, when the dry air flows while in contact with the inner surface of the hollow fiber membrane 220 and the wet air flows while in contact with the outer surface of the hollow fiber membrane 220, the moisture in the wet air is transferred to the dry air so that the dry air may be humidified. This humidification principle is the same as of the related art, and thus a detailed description thereof will be omitted.

In this embodiment, only the structure in which the openings on opposite sides of the membrane humidifier housing 100 are closed with a pair of caps 600. However, the structure of the membrane humidifier housing 100 is not limited as long as the membrane humidifier housing 100 includes the hollow fiber membrane cartridge 200 and the inside and outside thereof can be isolated from each other.

Even when a plurality of hollow fiber membrane cartridges 200 are provided in the interior of the membrane humidifier housing 100, a partition wall 137 may be provided in the middle portion of interior of the membrane humidifier housing 100 in the longitudinal direction thereof so as to completely isolate the inner space of the membrane humidifier housing 100 into a front portion and a rear portion. The partition wall 137 is erected to cross the middle portion of the longitudinal direction of the membrane humidifier housing 100, and insertion holes 139 are formed to allow the cartridge housing 210 to be inserted. Accordingly, the cartridge housing 210 is inserted into the insertion holes 139 in a fitting manner. At this time, the protruding ribs 213 formed on the outer surface of the middle portion of the cartridge housing 210 are in close contact with the inner surface of the mounting holes 510, so that the wet air flowing into the inner space on the front side of the membrane humidifier housing 100 may not be delivered to the inner space of the rear side of the membrane humidifier housing 100 without passing through the interior of the cartridge housing 210.

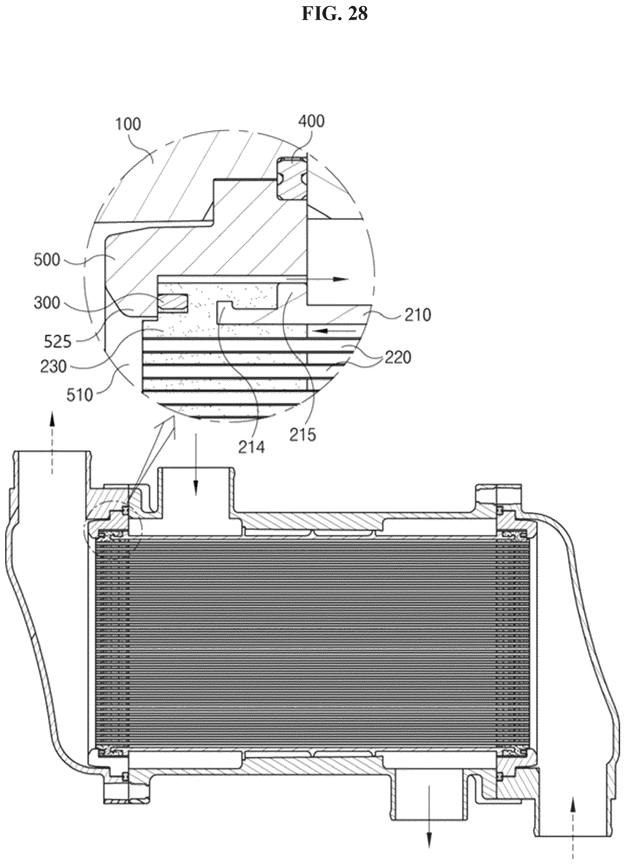

In addition, the head seal 400 sealing the gap between the outer surface of the bulkhead 500 and the inner surface of the caps 600 may be provided to prevent dry air from leaking in between the bulkhead 500 and the caps 600. The coupling structure of the head seal 400 and the effects thereof will be described in detail with reference to FIG. 28.

In this embodiment, only the case where three hollow fiber membrane cartridge 200 are provided in the interior of one membrane humidifier housing 100, the number, shape, and arrangement pattern of the hollow fiber membrane cartridge 200 provided in the interior of the membrane humidifier housing 100 may vary depending on the designer's choice.

When manufacturing a membrane humidifier for fuel cell according to the present disclosure, first, a cartridge housing 210 which is formed in the shape of a hollow tube having openings facing opposite sides in the longitudinal direction and which has a side wall having a plurality of vent holes 212, and a plurality of hollow fiber membranes 220 are inserted into the interior of the cartridge housing 210 in such a manner that the opposite ends of the cartridge housing 210 in the longitudinal direction thereof face the openings of the cartridge housing 210, and then, the inner space of opposite sides of the cartridge housing 210 in the longitudinal direction thereof is filled with the resin layer 230 to expose the opposite ends of the hollow fiber membrane 220 in the longitudinal direction thereof to the outside, thereby completing the manufacture of the hollow fiber membrane cartridge 200. When the hollow fiber membrane cartridge 200 is completely manufactured, the hollow fiber membrane cartridge 200 is inserted into the interior of the membrane humidifier housing 100 in which the wet air inlet 111 and the wet air outlet 112 communicating with the vent holes 212 are formed on opposite sides thereof in the longitudinal direction thereof, and the dry air inlet 610 and the dry air outlet 620 communicating with the hollow fiber membrane 220 are formed on opposite sides thereof in the longitudinal direction thereof, thereby completing the manufacture of a membrane humidifier for a fuel cell.

When the hollow fiber membrane cartridge 200 manufactured as described above is detachably provided in the interior of the membrane humidifier housing 100, only the hollow fiber membrane cartridge 200 can be replaced, making maintenance and repairing easy, and by filling the resin layer 230 in the interior of the cartridge housing 210, the resin layer 230 may be less used. In addition, since the hollow fiber membrane cartridge 200 can be manufactured in advance, the time required for manufacturing the membrane humidifier for fuel cell can be reduced.

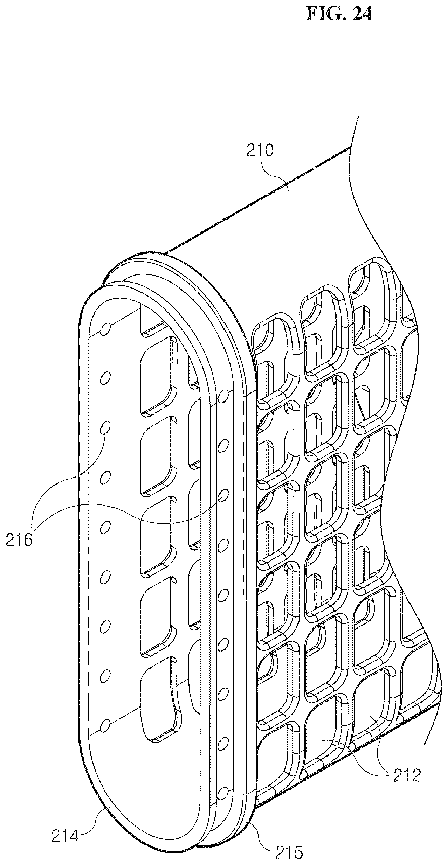

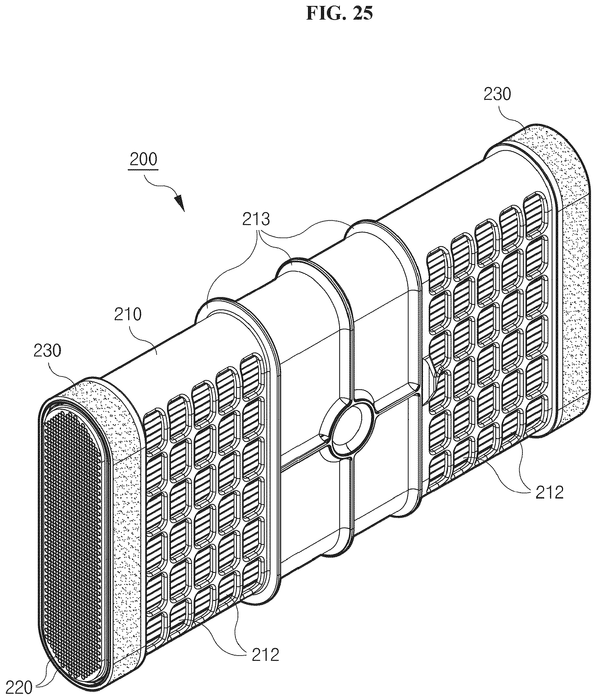

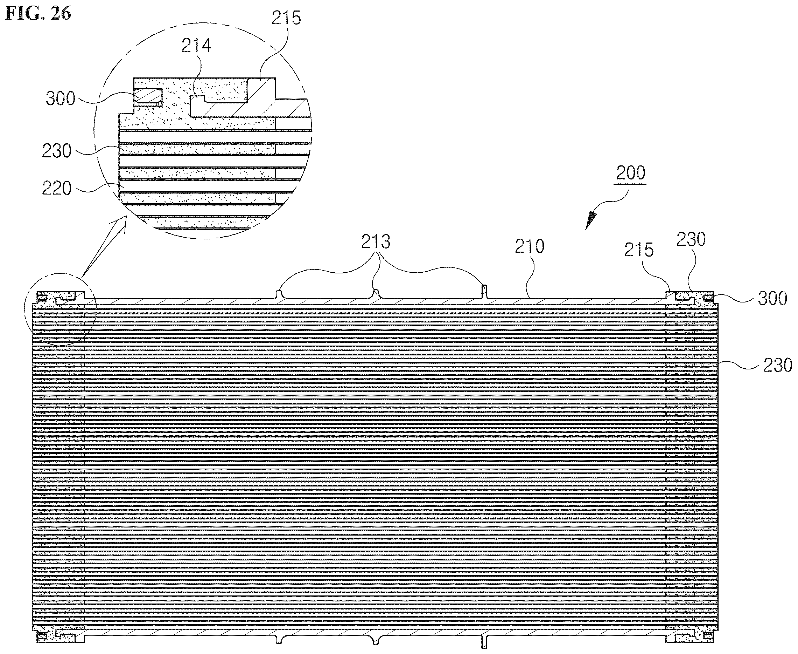

FIG. 24 is a partial perspective view of a cartridge housing 210 included in a membrane humidifier for a fuel cell according to the present disclosure, and FIGS. 25 and 26 are perspective and cross-sectional views illustrating a structure in which a hollow fiber membrane 220 and a resin layer 230 are coupled to the cartridge housing 210.

In the membrane humidifier for fuel cell according to the present disclosure, the resin layer 230 not only fills the inner space on opposite sides of the cartridge housing 210 in the longitudinal direction, but also covers the ends of the cartridge housing 210 in the longitudinal direction thereof and some of the outer surfaces of opposite sides thereof in the longitudinal direction thereof. As such, when the resin layer 230 is coupled to cover the ends of the cartridge housing 210 in the longitudinal direction thereof and some of the outer surfaces of opposite sides thereof in the longitudinal direction, even when the membrane humidifier housing 100, the cartridge housing 210, and the resin layer 230 undergo thermal expansion and contraction repeatedly so that a gap may be formed between respective components, the wet air may not leak into the gap between the components. This will be described in detail with reference to FIG. 28.

Meanwhile, to prevent the resin layer 230 coupled to the cartridge housing 210 from being easily removed from the cartridge housing 210, the cartridge housing 210 includes a locking protrusion 214 and a cartridge flange 215. The locking protrusion 214 may be formed over the entire opposite ends of the cartridge housing 210 in the longitudinal direction thereof and projects outward (more specifically towards the inner surface of the mounting holes 510), and the cartridge flange 215 is spaced a distance from the locking protrusion 214.

At this time, the locking protrusion 214 is provided to be completely embedded in the resin layer 230. Accordingly, even when the resin layer 230 is not fixed on the surface of the cartridge housing 210 and peeled off, as long as the locking protrusion 214 is damaged, the coupling of the resin layer 230 to the cartridge housing 210 may be maintained.

Furthermore, of the side wall of the cartridge housing 210, in a portion between the locking protrusion 214 and the cartridge flange 215, a plurality of through-holes 216, which is to be filled with the resin layer 230, may be formed. The resin layer 230 is initially in a liquid state, and when in contact with the cartridge housing 210, undergoes a curing process to be integrally coupled to the cartridge housing 210. As described above, when the through-holes 216 are formed in a portion of the side wall of the cartridge housing 210 surrounded by the resin layer 230, the resin layer 230, which is a liquid state, fills the through-holes 216 in the process in which the resin layer 230 is brought into contact with the cartridge housing 210. As a result, the bonding strength between the resin layer 230 and the cartridge housing 210 is very high.

In addition, when the resin layer 230 is provided to cover not only the locking protrusion 214 but also the cartridge flange 215, when the cartridge housing 210 is inserted into the mounting holes 510 of the bulkhead 500, the cartridge housing 210 may not directly contact the inner surface of the mounting holes 510, so the bonding strength may be decreased slightly. Therefore, in the membrane humidifier for fuel cell according to the present disclosure, the protrusion height of the cartridge flange 215 is greater than the protrusion height of the locking protrusion 214, and the resin layer 230 may cover up to a point where the cartridge flange 215 is formed from the outer surfaces of the opposite sides of the cartridge housing 210 in the longitudinal direction thereof.

When the end of the cartridge flange 215 is configured to be exposed to the outside as described above, since the end of the cartridge flange 215 is in close contact with the inner surface of the mounting holes 510, when the cartridge housing 210 is coupled to the bulkhead 500, the bonding strength between the cartridge housing 210 and the bulkhead 500 can be increased.

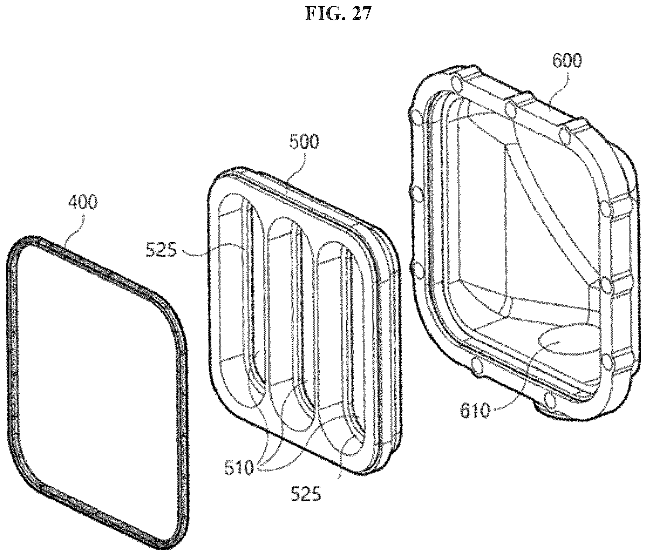

FIG. 27 is an exploded perspective view illustrating the coupling of the bulkhead 500 and the caps 600, and FIG. 28 is a vertical cross-sectional view of the membrane humidifier for a fuel cell according to the present disclosure, showing the directions in which the wet air and the dry air flow.

In the membrane humidifier for fuel cell according to the present disclosure, the gap between the resin layer 230 and the mounting holes 510 may be completely sealed. For example, the bulkhead 500 may include a protrusion 525 protruding from the entire outer end (left end in FIG. 28) of the mounting holes 510.

When the protrusion 525 is formed in the mounting holes 510 as described above, when the cartridge housing 210 is coupled to the bulkhead 500, the outer edge of the resin layer 230 is in close contact with the protrusion 525, so that the sealing force between the resin layer 230 and the mounting holes 510 may be increased. Furthermore, the O-ring 300 to seal between the protrusion 525 and the resin layer 230 may be additionally provided so as to more securely seal the gap between the resin layer 230 and the mounting holes 510.

In addition, in order to further increase the adhesion between the resin layer 230 and the protrusion 525, the resin layer 230 may have an outer edge that has the stepwise and bent shape, and the protrusion 525 may be mounted in such a way that an edge thereof is in close contact with the bent portion of the resin layer 230. As described above, when the edge of protrusion 525 is coupled to be press-fitted to the stepped bent portion of the resin layer 230, even when an external force and vibration are applied to the resin layer 230 or the bulkhead 500, the coupling portion does not shake and the fixed state thereof can be maintained. In addition, the area in which the resin layer 230 contacts the bulkhead 500 may be increased and thus, the sealing force may be further enhanced.

Meanwhile, since the cartridge housing 210, the resin layer 230, and the bulkhead 500 have different coefficients of thermal expansion, when the cartridge housing 210, the resin layer 230 and the bulkhead 500 are repeatedly heated and cooled, a fine gap may be formed at the contact surfaces of components, and accordingly, the wet air may enter the contact surfaces of respective components. At this time, in the case of the membrane humidifier for fuel cell according to the present disclosure, even when the wet air enters the contact surfaces of respective components, the wet air may be blocked by the O-ring 300 and the head seal 400. Accordingly, the wet air may not flow toward the caps 600, but return to the interior of the cartridge housing 210.

That is, in the membrane humidifier for fuel cell according to the present disclosure, even when gaps are formed among components, the wet air and the dry air do not directly contact each other. Accordingly, the moisture transmission using the hollow fiber membrane 220 as a medium can be stably maintained.

In the membrane humidifier for fuel cell according to the present disclosure, since a plurality of hollow fiber membrane cartridges are detachably mounted in one membrane humidifier housing, the assembly and replacement of components are very easy, and since the resin layer is configured to fill only opposite sides of the hollow fiber membrane cartridge, the amount of the resin layer used can be reduced, leading to lower manufacturing costs. Also, since the airtightness of the wet air flow path and the dry air flow path is increased and thus, the humidification efficiency may be increased.

As described above, although the present disclosure has been described in detail using preferred embodiments, the scope of the present disclosure is not limited to specific embodiments, and should be interpreted by the appended claims. In addition, those skilled in the art should understand that many modifications and variations can be made without departing from the scope of the present disclosure.

## Claims

1. A membrane humidifier for a fuel cell, comprising:
a hollow fiber membrane cartridge including
a cartridge housing which is formed as a hollow having openings facing opposite sides of the cartridge housing in the longitudinal direction thereof and which has a side wall having a plurality of vent holes,
a hollow fiber membrane inserted into an interior of the cartridge housing, and
a resin layer filling an inner space of opposite sides of the cartridge housing in the longitudinal direction thereof;
a membrane humidifier housing in which the hollow fiber membrane cartridge is formed; and
a bulkhead formed in an interior of the membrane humidifier housing, wherein
the bulkhead has mounting holes into which ends of the cartridge housing in the longitudinal direction thereof are inserted.

2. The membrane humidifier of claim 1, wherein
the membrane humidifier housing comprises a partition wall having an insertion hole into which the cartridge housing is inserted.

3. The membrane humidifier of claim 1, wherein the bulkhead has a protrusion protruding on an outer end of the mounting hole, and
the resin layer is in contact with the protrusion.

4. The membrane humidifier of claim 3, further comprising:
an O-ring sealing a gap between the protrusion and the resin layer.

5. A membrane humidifier for a fuel cell, comprising:
a hollow fiber membrane cartridge comprising
a cartridge housing which is formed as a hollow having openings facing opposite sides of the cartridge housing in the longitudinal direction thereof and which has a side wall having a plurality of vent holes, a locking protrusion protruding opposite sides thereof in the longitudinal direction thereof, and a flange spaced from the locking protrusion,
a hollow fiber membrane which is inserted into an interior of the cartridge housing, and
a resin layer which fills inner spaces of opposite sides of the cartridge housing in the longitudinal direction thereof; and
a membrane humidifier housing in which the hollow fiber membrane cartridge is formed; and
a plurality of through-holes filled with the resin layer are formed between a protrusion and the flange.

6. The membrane humidifier of claim 1 or 5, wherein
the resin layer is provided to cover opposite ends of the cartridge housing in the longitudinal direction thereof and the outer surfaces of opposite sides of the cartridge housing in the longitudinal direction.

7. The membrane humidifier of claim 1 or 5, wherein
the cartridge housing further comprises a protruding rib surrounding a middle portion of the cartridge housing in the longitudinal direction thereof, and
the vent holes are formed in a side wall of the cartridge housing in the longitudinal direction thereof and in another side thereof opposite to the side wall with respect to the protruding rib.

8. The membrane humidifier of claim 5, wherein
the membrane humidifier housing comprises a partition wall having an insertion hole into which the cartridge housing is inserted.

9. The membrane humidifier of claim 5, wherein
the resin layer has an outer edge that is bent to be in the shape of steps, and
the locking protrusion is in contact with a bent portion of the resin layer.

10. The membrane humidifier of claim 5, wherein
a protrusion height of the flange is greater than a protrusion height of the locking protrusion, and
the resin layer covers up to a point where the flange is formed, and is stacked up to the protrusion height of the flange.

11. A membrane humidifier for a fuel cell, comprising:
a hollow fiber membrane cartridge including
a cartridge housing which is formed as a hollow having openings facing opposite sides of the cartridge housing in the longitudinal direction thereof and which has a side wall having a plurality of vent holes,
a hollow fiber membrane inserted into an interior of the cartridge housing, and
a resin layer filling an inner space of opposite sides of the cartridge housing in the longitudinal direction thereof;
a membrane humidifier housing in which the hollow fiber membrane cartridge is formed; and
a bulkhead formed in an interior of the membrane humidifier housing, wherein the bulkhead is spaced apart from the cartridge housing.

12. The membrane humidifier of claim 11, wherein
the cartridge housing is connected to the bulkhead through the resin layer.

13. The membrane humidifier of claim 11, further comprising an O-ring between the bulkhead and the resin layer.

14. The membrane humidifier of claim 11, wherein
the cartridge housing has a locking protrusion protruding on opposite sides thereof in the longitudinal direction thereof and a flange spaced apart from the locking protrusion.

15. The membrane humidifier of claim 14, wherein
the resin layer is formed up to a height at which the flange is formed.
